# EUROPÄISCHE PATENTANMELDUNG

(11) **EP 4 432 556 A1**
(43) Veröffentlichungstag der Anmeldung: **18.09.2024**
(21) Anmeldenummer: 23162554.2
(22) Anmeldetag: 17.03.2023
(51) Int. Cl.: H02S 40/44

(54) **HYBRIDES PHOTOVOLTAIK-THERMIE-SYSTEM**

(71) Anmelder: AT Advanced Technologies GmbH, 86343 Königsbrunn (DE)
(72) Erfinder: Maier, Waldemar, 86343 Königsbrunn (DE); Maier, Viktor, 86343 Königsbrunn (DE); Dr. Hanifi, Hamed, 86343 Königsbrunn (DE)
(74) Vertreter: dompatent von Kreisler Selting Werner - Partnerschaft von Patent- und Rechtsanwälten mbB

(57) **Zusammenfassung**

Die Erfindung betrifft ein hybrides Photovoltaik-Thermie-System (30) zur Erzeugung elektrischer und thermischer Energie, umfassend
- ein Photovoltaik-Modul (32) mit einer ersten Seite (32a) und einer der ersten Seite gegenüberliegenden zweiten Seite (32b), wobei die erste Seite (32a) des Photovoltaik-Moduls (32) dazu ausgelegt ist, Solarenergie aufzunehmen und diese in elektrische Energie umzuwandeln;
- eine Kühlstruktur, wobei die Kühlstruktur an der zweiten Seite (32b) des Photovoltaik-Moduls (32) angeordnet ist und dazu ausgelegt ist, ein Kühlfluid zur Kühlung des Photovoltaik-Moduls (32) aufzunehmen;
- einem Einlass zum Einführen des Kühlfluids in die Kühlstruktur und einem Auslass zum Herausführen des Kühlfluids aus der Kühlstruktur.

## Beschreibung

Die vorliegende Erfindung betrifft ein hybrides Photovoltaik-Thermie-System zur Erzeugung elektrischer und thermischer Energie.

Photovoltaik-Systeme sind im Allgemeinen bekannt und werden dazu eingesetzt, Lichtenergie in Strom umwandeln. Sie leisten einen wichtigen Beitrag zu dem Ziel, mittelfristig auf fossile Energieträger zu verzichten und die CO2-Emissionen zu reduzieren.

Bei einer Weiterentwicklung klassischer Photovoltaik-Systeme, die auch als hybrides Photovoltaik-Thermie-System oder auch als PVT-System (photovoltaic thermal system) bezeichnet wird, wird nicht nur die Solarenergie in Strom umgewandelt und genutzt, sondern es wird auch die thermische Energie, die bei Photovoltaik-Modulen erzeugt wird, verwertet, und zwar beispielsweise zur Warmwasseraufbereitung. Dies ist insbesondere deshalb effizient, da bei einem Photovoltaik-Modul typischerweise mehr als 70 % der aufgenommenen Solarenergie in Wärme umgewandelt wird und nur ca. 20 % der aufgenommenen Solarenergie in Strom umgewandelt werden kann.

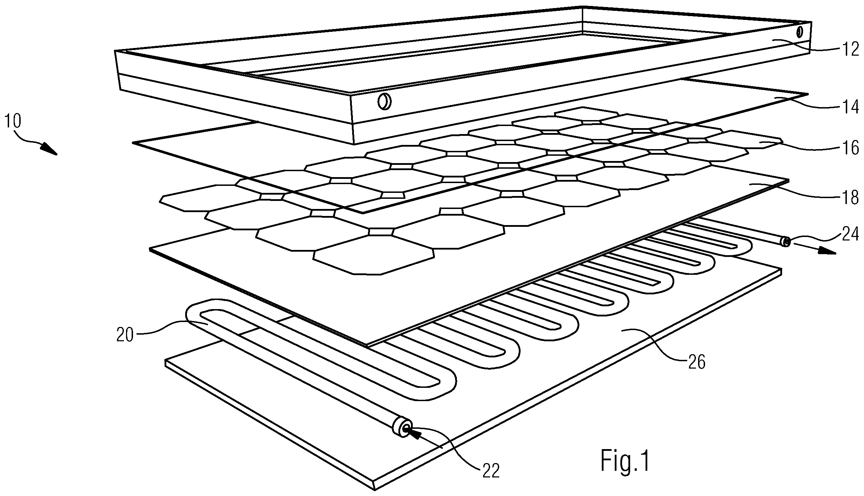

Aus dem Stand der Technik sind bereits einige PVT-Systeme bekannt. Ein typischer Aufbau derartiger PVT-Systeme ist in der Fig. 1 abgebildet. Das hier gezeigte PVT-System 10 weist dabei einen Rahmen 12 auf, der typischerweise aus Aluminium gefertigt ist. In dem Rahmen 12 ist eine Glasplatte 14 angeordnet, die ein Photovoltaik-Modul 16 abdeckt und dieses vor Regen, Staub und Verschmutzungen schützt. Unterhalb des Photovoltaik-Moduls 16 ist ein elektrischer Isolator 18 vorgesehen. Der elektrische Isolator 18 trennt das Photovoltaik-Modul 16 von einem Rohr 20, welches unterhalb des Photovoltaik-Moduls 16 angeordnet ist. Das Rohr 20 ist typischerweise aus einem Metall gefertigt, wobei bevorzugt Aluminium, Kupfer oder Stahl eingesetzt werden können. Das Metallrohr 20 ist mäanderförmig ausgebildet und weist einen Einlass 22 und einen Auslass 24 auf. Durch den Einlass 22 wird ein Kühlfluid in das Metallrohr 20 eingeführt. Das Kühlfluid fließt durch das Metallrohr 20 und wärmt sich dabei aufgrund der erhöhten Temperatur des Photovoltaik-Moduls 16 auf. Das erwärmte Fluid strömt anschließend durch den Auslass 24 aus dem Metallrohr 20 heraus. Das erwärmte Fluid kann anschließend verwendet werden, um beispielsweise einen Heizkörper oder ein Schwimmbecken aufzuwärmen. Unterhalb des Metallrohrs 20 ist schließlich bei dem in der Fig. 1 gezeigten PVC-System ein Wärmeisolator 26 vorgesehen, der dazu dient, dass möglichst wenig von der im Metallrohr 20 gespeicherten Wärme verloren geht.

Die vorstehend beschriebenen PVT-Systeme gemäß dem Stand der Technik bieten den Vorteil, dass ein Teil der Wärmeenergie, die bei Photovoltaik-Modulen durch die Sonneneinstrahlung erzeugt wird, genutzt werden kann und dass dadurch die Gesamteffizienz des Photovoltaik-Systems erhöht wird. Ein zusätzlicher Vorteil der aus dem Stand der Technik beschriebenen PVT-Systeme liegt darin, dass gleichzeitig die verwendeten Photovoltaik-Module durch das Kühlfluid gekühlt werden, wodurch die Effizienz der Photovoltaik-Module erhöht wird, denn die Effizienz der meisten Photovoltaik-Module nimmt bekanntermaßen bei zunehmender Temperatur ab.

Jedoch sind die aus dem Stand der Technik beschriebenen PVT-Systeme auch mit einigen Nachteilen verbunden. Einerseits sind die beschriebenen Systeme relativ kostenaufwendig, da das beschriebene Kühlrohr aufwendig in der Herstellung ist und das beim Kühlrohr verwendete Metall relativ teuer ist. Ein weiterer Nachteil der aus dem Stand der Technik bekannten PVT-Systeme ist darin zu sehen, dass die Kühlung der Photovoltaik-Module nicht besonders homogen und effizient erfolgt.

Ausgehend von den vorstehend diskutierten Nachteilen des Standes der Technik ist es Aufgabe der vorliegenden Erfindung, ein PVT-System (im Rahmen der vorliegenden Erfindung auch als hybrides Photovoltaik-Thermie-System bezeichnet) bereitzustellen, dass eine besonders homogene und effiziente Kühlung der Photovoltaik-Module ermöglicht und dabei auch besonders einfach und günstig in der Herstellung ist.

Zur Lösung der vorstehend genannten Aufgabe wird mit der vorliegenden Erfindung ein hybrides Photovoltaik-Thermie-System (PVT-System) zur Erzeugung elektrischer und thermischer Energie vorgeschlagen, wobei das PVT-System Folgendes aufweist:
- ein Photovoltaik-Modul mit einer ersten Seite und einer der ersten Seite gegenüberliegenden zweiten Seite, wobei die erste Seite des Photovoltaik-Moduls dazu ausgelegt ist, Solarenergie aufzunehmen und diese in elektrische Energie umzuwandeln;
- eine Kühlstruktur, wobei die Kühlstruktur an der zweiten Seite des Photovoltaik-Moduls angeordnet ist und dazu ausgelegt ist, ein Kühlfluid zur Kühlung des Photovoltaik-Moduls aufzunehmen;
- einem Einlass zum Einführen des Kühlfluids in die Kühlstruktur und einem Auslass zum Herausführen des Kühlfluids aus der Kühlstruktur.

Die Kühlstruktur kann eine oder mehrere Kammern aufweisen, die das Kühlfluid aufnehmen können. Die Kühlstruktur kann insbesondere quaderfömig und flach ausgebildet sein, wobei die Länge und die Breite der Kühlstruktur I_KS, b_KS der Länge und der Breite des Photovoltaik-Moduls l_PM, b_PM entsprechen können. Beispielsweise kann vorgesehen sein, dass die Breite der Kühlstruktur b_KS mindestens 80 % oder 90 % der Breite des Photovoltaik-Moduls b_PM beträgt, während die Länge der Kühlstruktur l_KS mindestens 80 % oder 90 % der Länge des Photovoltaik-Moduls l_PM beträgt. Außerdem kann die Dicke der Kühlstruktur d_KS < 0,1 x I_KS, und bevorzugt d_KS < 0,05 l_KS betragen. Anders ausgedrückt kann die Kühlstruktur besonders flach ausgebildet sein.

Die Verwendung einer Kühlstruktur auf der Rückseite des Photovoltaik-Moduls bietet den Vorteil, dass die einfallenden Lichtstrahlen durch die Kühlstruktur nicht beeinträchtigt und insbesondere nicht abgeschwächt werden, sondern dass die gesamte Lichtintensität auf das entsprechende Photovoltaik-Modul gelangen kann. Die Verwendung einer flach ausgebildeten Kühlstruktur bietet zudem im Vergleich zur Verwendung eines mäanderförmigen Metallrohrs den Vorteil, dass eine besonders homogene Kühlung des Photovoltaik-Moduls ermöglicht wird. Dabei kann die Wärme des Photovoltaik-Moduls besonders effizient abgeführt werden, da die Kühlstruktur und das Photovoltaik-Modul einen großflächigen Kontakt aufweisen und im Idealfall die Kühlstruktur die gesamte Rückseite des Photovoltaik-Moduls kontaktiert. Dadurch kann ein großer Teil der vorhandenen Wärmeenergie abgeführt und weiterverwendet werden, beispielsweise um einen Heizkörper, ein Schwimmbecken, einen Warmwasserspeicher oder einen Pufferspeicher zu erwärmen. Zudem ist die Herstellung einer quaderförmigen Kühlstruktur deutlich einfacher und günstiger als die Herstellung eines mäanderförmiges Metallrohrs.

Bevorzugt kann vorgesehen sein, dass die Kühlstruktur eine flach ausgebildete erste Kammer aufweist, wobei die erste Kammer eine erste Seite und eine der ersten Seite gegenüberliegende zweite Seite aufweist, und die erste Seite der ersten Kammer an der zweiten Seite des Photovoltaik-Moduls angeordnet ist. Die erste Kammer kann insbesondere quaderförmig ausgebildet sein, wobei die erste Kammer eine Länge I_K1, eine Breite b_K1 und eine Dicke d_K1 aufweist und d_K1 < 0,1 I_K1 gilt, und insbesondere d_K1 < 0,05 I_K1 gilt. Gemäß dieser Ausführungsform der Erfindung kann vorgesehen sein, dass der Einlass und der Auslass unmittelbar mit der ersten Kammer verbunden sind und dass dadurch das Kühlfluid durch den Einlass direkt in die erste Kammer eingeführt werden kann.

Ferner kann vorgesehen sein, dass die Kühlstruktur eine zweite Kammer aufweist, die an der zweiten Seite der ersten Kammer angeordnet ist und die über eine Öffnung mit der ersten Kammer verbunden ist, wobei die Öffnung insbesondere schlitzförmig oder kreisförmig ausgebildet sein kann. Gemäß dieser Ausführungsform der Erfindung kann vorgesehen sein, dass der Einlass mit der zweiten Kammer verbunden ist und dass der Einlass dazu ausgelegt ist, das Kühlfluid mittelbar über die zweite Kammer in die erste Kammer einzuführen. Die zweite Kammer weist eine Länge l_K2, eine Breite b_K2 und eine Dicke d_K2 auf, wobei bevorzugt das Verhältnis 0,5 < d_K2 / b_K2 < 1,5 beträgt. Anders ausgedrückt ist die zweite Kammer bevorzugt nicht flach ausgebildet, sondern weist eine nahezu quadratische Querschnittsfläche auf. Dadurch kann in der zweiten Kammer eine relativ große Menge an Kühlfluid zwischengespeichert werden, bevor diese in die bevorzugt flache erste Kammer eingeführt wird. Durch dieses zusätzliche Reservoir kann die Kühlung des Photovoltaik-Moduls besonders effizient gestaltet werden.

Gemäß einer Ausführungsform der vorliegenden Erfindung kann vorgesehen sein, dass die erste Kammer aus einer ersten Lage sowie einer der ersten Lage gegenüberliegenden zweiten Lage, sowie Seitenwänden gebildet ist, die sich von der ersten Lage zu der zweiten Lage erstrecken, wobei die zweite Lage an der zweiten Seite des Photovoltaik-Moduls angeordnet ist. Die Lagen können als robuste Platten oder auch als flexible Schichten ausgebildet sein. Dadurch kann ein besonders einfacher Aufbau der ersten Kammer gewährleistet werden. Zudem bietet die Kühlstruktur mit der vorstehend beschriebenen ersten Kammer den Vorteil, dass sie ein flächiges Kontaktelement für die Kontaktierung der zweiten Seite des Photovoltaik-Moduls aufweist und dadurch eine besonders effiziente Kühlung des Photovoltaik-Moduls erlaubt.

Gemäß der vorliegenden Erfindung kann es zudem vorgesehen sein, dass die erste Kammer durch die erste Lage, das Photovoltaik-Modul sowie Seitenwänden gebildet wird, die sich von der ersten Lage zu der zweiten Seite des Photovoltaik-Moduls erstrecken. Auf diese Weise kann eine besonders einfache und kostengünstige Kühlstruktur bereitgestellt werden.

Darüber hinaus kann bei der vorliegenden Erfindung vorgesehen sein, dass die erste Lage oder die zweite Lage eine Oberflächenstruktur aufweist, oder alternativ beide Lagen eine Oberflächenstruktur aufweisen. Dabei kann die Oberflächenstruktur insbesondere rillenförmig ausgebildet sein oder es können durch die Oberflächenstruktur Kanalwände bereitgestellt werden, die parallel oder orthogonal zu der Längsachse der ersten Lage und/oder der zweiten Lage verlaufen und einzelne Kanäle innerhalb der ersten Kammer definieren. Somit können in der ersten Kammer diverse Kanäle ausgebildet sein, welche die Strömungsrichtung des Kühlfluids festlegen. Die Kanäle innerhalb der ersten Kammer können besondere länglich ausgebildet sein. Die Oberflächenstruktur kann durch ein abtragendes Verfahren oder durch ein auftragendes Verfahren erzeugt werden. Beispielsweise kann ein mechanisches Abtragsverfahren oder ein Laserablationsverfahren eingesetzt werden, um die zuvor genannte rillenförmige Oberflächenstruktur auf der Oberfläche einer Lage zu erzeugen. Auch kann vorgesehen sein, dass ein 3D-Druckverfahren verwendet wird, um die vorstehend beschriebenen Kanalwände auf eine der Lagen aufzubringen.

Des Weiteren kann vorgesehen sein, dass die Kanalwände durchgängig von einer Seite der ersten Kammer bis zur gegenüberliegenden Seite der ersten Kammer verlaufen. Dabei können die Kanäle parallel zur Längsachse des Photovoltaik-Moduls bzw. der ersten Kammer verlaufen oder aber auch orthogonal zu dieser Längsachse. Dadurch können zahlreiche Kanäle nebeneinander angeordnet werden, wodurch eine besonders hohe Menge an Kühlfluid durch die erste Kammer strömen kann. Durch die individuell gestaltbare Oberflächenstruktur kann je nach Anwendungsgebiet die Menge des durch die Kühlkammer leitbaren Kühlfluids sowie die Strömungsrichtung individuell ausgestaltet werden.

Gemäß einer bevorzugten Ausführungsform der vorliegenden Erfindung kann zudem vorgesehen sein, dass mindestens eine Kanalwand zumindest eine Unterbrechung aufweist, wobei mindestens eine Unterbrechung bevorzugt in der Mitte einer Kanalwand vorgesehen ist. Eine durchgängige Kanalwand, welche sich von einer Seite der ersten Kammer bis zur gegenüberliegenden Seite der ersten Kammer erstreckt, hat den Vorteil, dass die Strömungsrichtung des Kühlfluid innerhalb des gesamten Kanals eindeutig definiert ist und die Strömung des Kühlfluids einfach zu kalkulieren ist. Hingegen kann es in einigen Anwendungen von Vorteil sein, die Kanalwand nicht durchgängig zu gestalten, sondern Unterbrechungen innerhalb der Kanalwand vorzusehen. Durch die bewusste Implementierung der genannten Unterbrechungen in der Kanalwand wird es nämlich ermöglicht, dass das Kühlfluid auch im Falle eines verstopften Kanals ausweichen kann und durch einen oder mehrere benachbarte Kanäle strömen kann. Anders ausgedrückt bieten die genannten Unterbrechungen in der Kanalwand alternative Strömungspfade innerhalb der ersten Kammer, durch die das Kühlfluid im Falle eines verstopften Kanals strömen kann. Dadurch kann in vorteilhafter Weise das Risiko einer unzureichenden Kühlung im Falle von blockierten Kanälen signifikant reduziert werden. Gemäß einigen Ausführungsformen der vorliegenden Erfindung kann vorgesehen sein, dass sämtliche Kanalwände Unterbrechungen aufweisen, wobei die Unterbrechungen vorzugsweise in der Mitte der Kanalwände vorgesehen sein können.

Auch kann gemäß der vorliegenden Erfindung vorgesehen sein, dass die erste Kammer als eine durchgängige Kammer ausgebildet ist. Gemäß dieser Ausführungsform weist die erste Kammer also keine Kanalwände auf, welche die erste Kammer in einzelne Kanäle unterteilen würden. Dadurch wird eine erste Kammer bereitgestellt, die komplett frei von etwaigen Kanalwänden ist, wodurch eine besonders große Menge an Kühlfluid durch die erste Kammer strömen kann. Dadurch wird eine besonders effiziente Kühlung des Photovoltaik-Moduls und gleichzeitig eine effiziente Nutzung der Wärmeenergie ermöglicht.

Gemäß der vorliegenden Erfindung kann es vorgesehen sein, dass die erste Kammer aus einem Kunststoffmaterial, insbesondere aus Polycarbonat oder aus Polymethylmethacrylat, PMMA, gefertigt ist. Auch kann vorgesehen sein, dass die erste Kammer aus einem Leichtmetall (beispielsweise Aluminium, Magnesium oder Titan) oder aus Glas gefertigt ist. Dadurch kann die erste Kammer bzw. die Kühlstruktur besonders kostengünstig gefertigt werden. Gleichzeitig kann das Gesamtgewicht des PVT-Systems geringgehalten werden. Die erste Kammer kann dabei wahlweise aus einem transparenten oder aus einem nicht-transparenten Material gefertigt sein. Die Verwendung eines transparenten Materials bietet den Vorteil, dass die erste Kammer über einen Schweißprozess mit angrenzenden Komponenten verbunden werden kann. Ferner kann bei der vorliegenden Erfindung vorgesehen sein, dass zwischen der ersten Lage und der zweiten Lage Abstandshalter angeordnet sind, welche die Dicke der ersten Kammer definieren. Die Abstandshalter, welche gemäß einigen Ausführungsformen der vorliegenden Erfindung als separate Bauteile ausgebildet sind, können insbesondere an die erste Lage und/oder an die zweite Lage geklebt sein. Alternativ können die Abstandshalter mit der ersten Lage und/oder mit der zweiten Lage verschweißt sein. Ferner kann vorgesehen sein, dass die Abstandshalter integral mit der ersten Lage und/oder der zweiten Lage ausgebildet sind. Die Abstandshalter tragen einerseits dazu bei, dass der Abstand zwischen der ersten Lage und der zweiten Lage in einfacher Weise festgelegt werden kann und ermöglichen darüber hinaus eine besonders einfache Montage der ersten Kammer. Zudem tragen die Abstandshalter zu der mechanischen Stabilität der ersten Kammer bei. Dies ist insbesondere dann vorteilhaft, wenn die erste Kammer eine oder zwei Lagen aufweist, die aus Kunststoff oder aus Glas gefertigt sind. Der Einsatz von Abstandshaltern bietet den zusätzlichen Vorteil, dass die erste Kammer durch den Austausch von Abstandshaltern in besonders einfacher Weise in Abhängigkeit von den Anforderungen in einem konkreten Anwendungsgebiet eingestellt werden kann.

Die Abstandshalter können insbesondere aus einem Kunststoffmaterial, einem Leichtmetall oder aus Glas bzw. Glasfaser gefertigt sein. Die Abstandshalter sind jedoch nicht auf die vorstehend genannten Materialien beschränkt.

Gemäß einigen Ausführungsformen der vorliegenden Erfindung kann zudem vorgesehen sein, dass die Abstandshalter einen kreisförmigen, einen ringförmigen, einen rechteckigen oder einen dreieckigen Querschnitt aufweisen sowie eine Dicke, die kleiner als 20 mm, bevorzugt kleiner als 10 mm, und besonders bevorzugt kleiner als 5 mm ist. Die maximale Dimension der Abstandshalter (d.h. der Durchmesser einer kreisförmigen Struktur, der Außendurchmesser einer ringförmigen Struktur, die längere Seite einer rechteckigen Struktur oder die längste Seite einer dreieckigen Struktur) kann gemäß einigen Ausdrucksformen maximal 10 cm, maximal 5 cm oder maximal 2 cm betragen.

Ferner kann vorgesehen sein, dass die erste Lage und/oder die zweite Lage mehrere Aufnahmestrukturen aufweisen, die dazu ausgelegt sind, die Abstandshalter aufzunehmen. Beispielsweise können die Aufnahmestrukturen als Aufnahmenuten ausgebildet sein, die in Abhängigkeit von der Form der vorgesehenen Abstandshalter ausgestaltet sind. Die Aufnahmenuten können also insbesondere kreisförmig, rechteckig oder dreieckig ausgestaltet sein. Die Aufnahmestrukturen bzw. die Aufnahmenuten bieten den Vorteil, dass die Aufnahmestrukturen einfach und schnell aufgenommen werden können, indem diese in die Aufnahmestrukturen eingeführt und ggf. in die Aufnahmestrukturen geklemmt werden. Gemäß dieser Ausführungsform ist also ein Kleben oder Verschweißen der Abstandshalter nicht erforderlich. Folglich kann ein und dieselbe Kammer für verschiedene Anwendungen verwendet werden, indem mehrere Abstandhalter ergänzt oder entfernt werden. Zudem kann vorgesehen sein, dass die Aufnahmestrukturen äquidistant auf der ersten Lage und/oder auf der zweiten Lage angeordnet sind.

Auch kann vorgesehen sein, dass ein Klebstoff bzw. ein Klebmaterial oder ein Verbundmaterial als Abstandshalter verwendet wird. Dadurch wird ein besonders einfaches Aufbringen der benötigten Abstandshalter auf der ersten Lage und/oder der zweiten Lage ermöglicht. Insgesamt kann dadurch der Herstellungsprozess signifikant vereinfacht und beschleunigt werden.

Bevorzugterweise kann vorgesehen sein, dass die Abstandshalter aus Kunststoff gefertigt sind. Dadurch kann das Gesamtgewicht des PVT-Systems geringgehalten werden, während Kunststoffmaterialien die für die erfindungsgemäßen PVT-Systeme notwendige mechanische Stabilität gewährleisten. Zudem ist der Einsatz von Abstandshaltern aus Kunststoff dann besonders vorteilhaft, wenn die erste Lage oder die zweite Lage aus Glas gefertigt ist. In diesem Fall bieten Kunststoff-Abstandshalter eine besonders vorteilhafte mechanische Stabilität und reduzieren das Risiko eines möglichen Glasbruchs.

Gemäß der vorliegenden Erfindung kann ferner vorgesehen sein, dass die Kühlstruktur eine dritte Lage aufweist, wobei die zweite Lage zwischen der ersten Lage und der dritten Lage angeordnet ist. Dadurch kann eine erste Kammer bereitgestellt werden, die zwischen der ersten Lage und der zweiten Lage ausgebildet ist, sowie eine dritte Kammer, die zwischen der zweiten Lage und der dritten Lage ausgebildet ist.

Gemäß einer weiteren Ausführungsform der vorliegenden Erfindung kann vorgesehen sein, dass die Kühlstruktur eine erste Kammer und eine dritte Kammer aufweist, wobei die erste Kammer zwischen dem Photovoltaik-Modul und der ersten Lage ausgebildet und die dritte Kammer zwischen der ersten Lage und der zweiten Lage ausgebildet sein kann. Dadurch sind insgesamt lediglich zwei Lagen (sowie entsprechende Seitenwände) notwendig, um zwei separate Kammern bereitzustellen.

Ferner kann gemäß der vorliegenden Erfindung vorgesehen sein, dass die Kühlstruktur eine erste Kammer und eine dritte Kammer aufweist, wobei die erste Kammer zwischen einer ersten Lage und einer zweiten Lage und die dritte Kammer zwischen der zweiten Lage und der dritten Lage ausgebildet ist. Zwischen der ersten Lage und der zweiten Lage sowie zwischen der zweiten Lage und der dritten Lage können zudem Abstandshalter vorgesehen sind. Alternativ hierzu kann vorgesehen sein, dass die zweite Lage an ihren der ersten Lage und der dritten Lage gegenüberliegenden Seiten jeweils eine Oberflächenstruktur aufweist, welche mehrere Kanäle definieren. Dabei können die Oberflächenstrukturen durchgängig ausgebildet sein oder aber auch (wie vorstehend beschrieben) Unterbrechungen aufweisen.

In dem Fall, dass zwei Lagen verwendet werden, um zwei separate Kammern bereitzustellen, kann es vorgesehen sein, dass die Abstandshalter zwischen dem Photovoltaik-Modul und der ersten Lage sowie zwischen der ersten Lage und der zweiten Lage angeordnet sind. Ferner kann vorgesehen sein, dass die erste Lage, welche zwischen dem Photovoltaik-Modul und der zweiten Lage angeordnet ist, eine Oberflächenstrukturierung aufweist, und zwar in den auf einer Seite oder auf beiden Seiten, die dem Photovoltaik-Modul bzw. der zweiten Lage zugewandt sind.

Schließlich kann bei dem erfindungsgemäßen System vorgesehen sein, dass das Photovoltaik-Modul als bifaziales Photovoltaik-Modul mit zwei photoelektrisch aktiven Seiten ausgebildet ist und dass die erste Kammer der Kühlstruktur zwischen den beiden aktiven Seiten des bifazialen Photovoltaik-Moduls angeordnet ist. Dadurch kann eine besonders effiziente Kühlung des bifazialen Photovoltaik-Moduls bereitgestellt werden. Dabei kann eine einzelne Kammer zum Einsatz kommen, welche gleichzeitig beide photoelektrisch aktiven Seiten des bifazialen Photovoltaik-Moduls kühlt, oder aber auch zwei Kammern, von denen jeweils eine für die Kühlung einer photoelektrisch aktiven Seite des bifazialen Photovoltaik-Moduls ausgelegt ist.

Die vorliegende Erfindung wird nachfolgend anhand der Figuren näher erläutert. Dabei zeigen die Figuren Folgendes:
- Fig. 1: ein PVT-System gemäß dem Stand der Technik,
- Fig. 2: ein Ausführungsbeispiel des erfindungsgemäßen PVT-Systems,
- Fig. 3: ein weiteres Ausführungsbeispiel des erfindungsgemäßen PVT-Systems,
- Fig. 4: ein PVT-System gemäß einem Ausführungsbeispiel der vorliegenden Erfindung,
- Fig. 5: eine vergrößerte Darstellung des in der Fig. 4 gezeigten Ausführungsbeispiels der vorliegenden Erfindung, welche eine mögliche Ausgestaltung der Kühlstruktur zeigt,
- Fig. 6: ein Ausführungsbeispiel der ersten Kammer gemäß der vorliegenden Erfindung mit durchgängigen Kanalwänden,
- Fig. 7: ein weiteres Ausführungsbeispiel der ersten Kammer gemäß der vorliegenden Erfindung mit unterbrochenen Kanalwänden,
- Fig. 8: ein weiteres Ausführungsbeispiel der ersten Kammer gemäß der vorliegenden Erfindung,
- Fig. 9: ein weiteres Ausführungsbeispiel der ersten Kammer gemäß der vorliegenden Erfindung,
- Fig. 10: ein weiteres Ausführungsbeispiel der ersten Kammer gemäß der vorliegenden Erfindung, und
- Fig. 11: ein weiteres Ausgangsbeispiel der ersten Kammer gemäß der vorliegenden Erfindung.

Die Fig. 1 zeigt ein PVT-System 10 gemäß dem Stand der Technik und wurde bereits im einleitenden Teil der Beschreibung diskutiert.

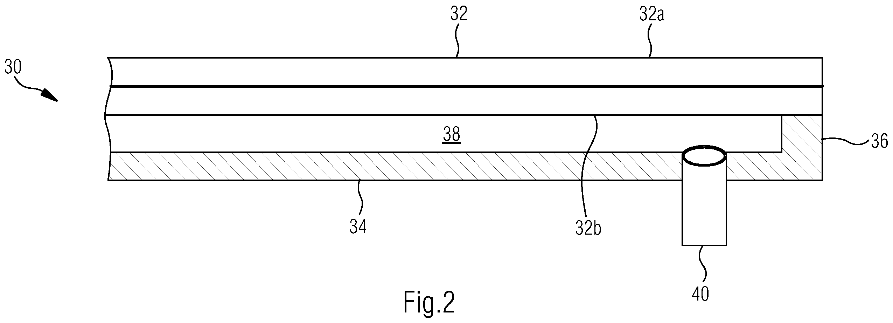

In der Fig. 2 ist ein Ausführungsbeispiel des erfindungsgemäßen PVT-Systems 30 dargestellt. Das PVT-System 30 weist ein Photovoltaik-Modul 32 auf, wie es aus dem Stand der Technik bekannt ist. Das Photovoltaik-Modul weist eine erste Seite 32a und eine zweite Seite 32b auf, die der ersten Seite 32a gegenüberliegt. Die erste Seite 32a des Photovoltaik-Moduls 32 ist dazu ausgelegt, Solarenergie aufzunehmen und diese in elektrische Energie umzuwandeln. Das PVT-System 30 weist zudem eine erste Lage 34 auf, die an der zweiten Seite 32b des Photovoltaik-Moduls 32 angeordnet ist. Die erste Lage 34 bildet gemeinsam mit dem Photovoltaik-Modul 32 sowie der Seitenwand 36, die sich von der ersten Lage 34 zu dem Photovoltaik-Modul 32 erstreckt, eine erste Kammer 38. Das in der Fig. 2 gezeigte PVT-System 30 weist eine Kühlstruktur mit einer Kammer ("erste Kammer 38") auf, die dazu ausgelegt ist, dass Photovoltaik-Modul 32 gleichmäßig zu kühlen und dabei die erzeugte Wärmeenergie von dem Photovoltaik-Modul 32 abzuführen. Die abgeführte Wärmeenergie kann anschließend verwendet werden, um beispielsweise einen Heizkörper oder ein Schwimmbecken aufzuwärmen. Durch den Einsatz der Kühlstruktur werden also gleichzeitig zwei Wirkungen erzielt, nämlich einerseits die Aufnahme der Wärmeenergie zur anschließenden Nutzung dieser, sowie anderseits die Kühlung des Photovoltaik-Moduls 32 zur Erhöhung dessen Energieeffizienz. Wie in der Fig. 2 dargestellt, ist bei dem abgebildeten PVT-System 30 zudem ein Einlass 40 vorgesehen, der dazu ausgelegt ist, ein Kühlfluid in die erste Kammer 38 einzuführen. Das in der ersten Kammer 38 durch das erwärmte Photovoltaik-Modul 32 aufgewärmte Kühlfluid kann anschließend über einen Auslass (in der Fig. 2 nicht abgebildet) aus der Kammer herausgeführt werden und für das Aufwärmen eines Heizkörpers oder eines Schwimmbeckens verwendet werden.

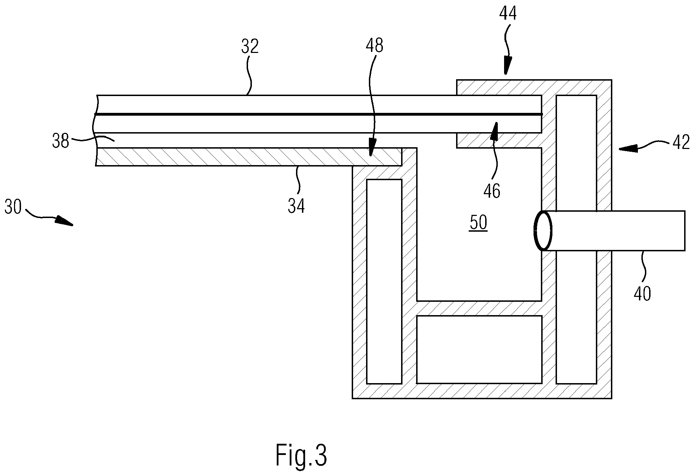

In der Fig. 3 ist ein weiteres Ausführungsbeispiel des erfindungsgemäßen PVT-Systems 30 dargestellt. Das in dieser Figur abgebildete PVT-System 30 weist zusätzlich einen Rahmen 42 auf, der beispielsweise aus Aluminium oder aus einem Kunststoffmaterial gefertigt sein kann. Der Rahmen 42 weist eine erste Haltestruktur 44 auf, die dazu ausgelegt ist, das Photovoltaik-Modul 32 aufzunehmen. In dem in der Fig. 3 gezeigten Ausführungsbeispiel weist die erste Haltestruktur 44 eine Aufnahmenut 46 auf, durch die das Solarmodul 32 stabil gehalten werden kann. Zudem weist der Rahmen 42 eine zweite Haltestruktur 48 auf, die dazu ausgelegt ist, die erste Lage 34 aufzunehmen. Die zweite Haltestruktur 48 kann beispielsweise als Aufnahmenut (ähnlich wie bei der ersten Haltestruktur 44) oder als Aufnahmestufe (wie in der Fig. 3 gezeigt) ausgestaltet sein. Zudem ist bei dem in der Fig. 3 abgebildeten PVT-System 30 eine zweite Kammer 50 vorgesehen, die an die erste Kammer 38 angrenzt. Die erste Kammer 38 und die zweite Kammer 50 sind über eine Öffnung miteinander verbunden. Die Öffnung kann beispielsweise kreisförmig oder aber auch schlitzförmig ausgestaltet sein. Gemäß dem in der Fig. 3 dargestellten PVT-System 30 ist der Einlass 40 dazu ausgelegt, ein Kühlfluid zunächst in die zweite Kammer 50 einzuführen, von wo aus das Kühlfluid anschließend über die vorstehend genannte Öffnung in die erste Kammer 38 geführt wird. Der Einsatz des zuvor beschriebenen Rahmens 42 ist einerseits deshalb vorteilhaft, weil dieser eine stabile Haltung des Photovoltaik-Moduls 32 sowie der ersten Lage 34 erlaubt, und andererseits da durch die zweite Kammer 50 ein Reservoir bereitgestellt wird, in dem das Kühlfluid zwischengespeichert werden kann, bevor es in die erste Kammer 38 eingeführt wird. Dadurch wird eine besonders effiziente Kühlung des Photovoltaik-Moduls 32 gewährleistet.

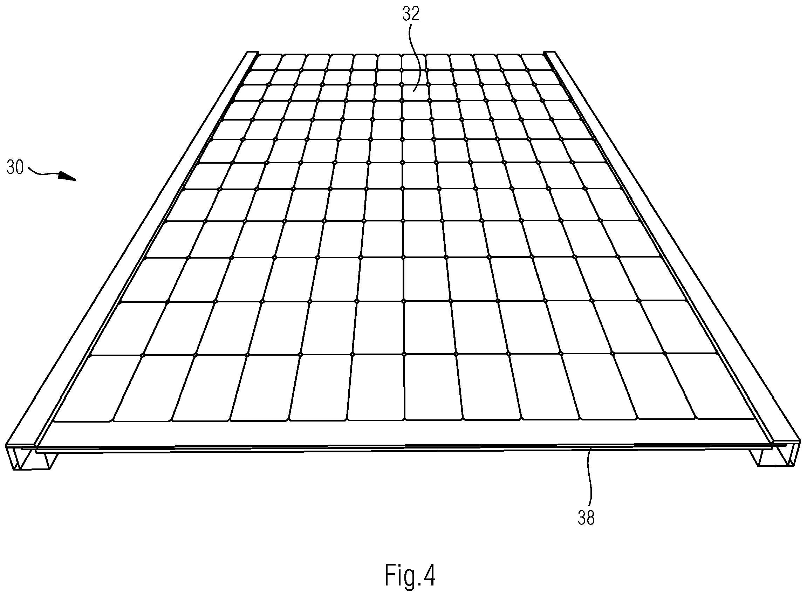

In der Fig. 4 ist ein PVT-System 30 gemäß einem Ausführungsbeispiel der vorliegenden Erfindung abgebildet. Wie in dieser Figur zu erkennen ist, weist das PVT-System 30 ein flaches Photovoltaik-Modul 32 auf, dass eine Länge und eine Breite aufweist, die jeweils deutlich größer sind als die Dicke des Photovoltaik-Moduls 32. Zudem ist in dieser Figur zu erkennen, dass unterhalb des Photovoltaik-Modul 32 eine Kühlstruktur mit einer ersten Kammer 38 vorgesehen ist, durch die ein Kühlfluid fließen kann, wodurch das Photovoltaik-Modul 32 flächig und daher in homogener Weise gekühlt werden kann. Wie ebenfalls der Fig. 4 zu entnehmen ist, kann die erste Kammer 38 bzw. die Kühlstruktur, welche die erste Kammer aufweist, derart ausgebildet sein, dass ihre Oberfläche nahezu die gesamte Rückseite des Photovoltaik-Moduls 32 abdeckt. Dadurch wird eine besonders effiziente Kühlung des Photovoltaik-Moduls 32 ermöglicht.

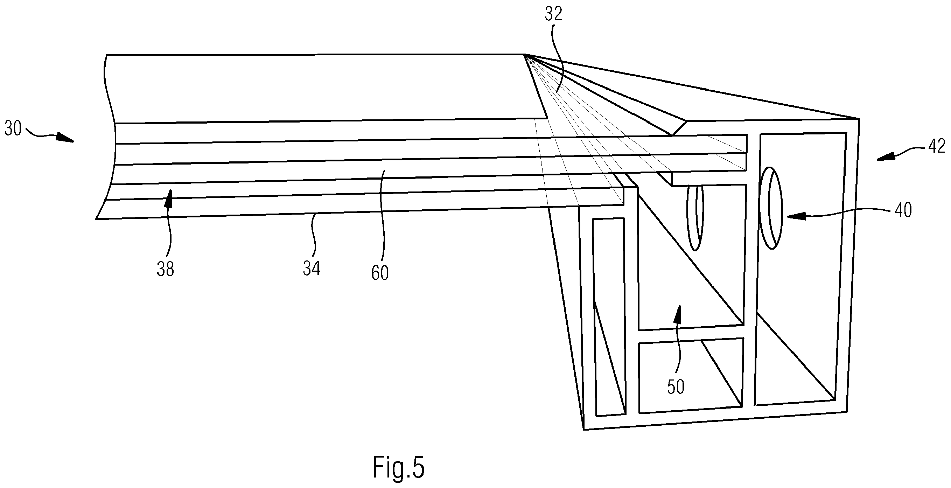

In der Fig. 5 ist eine vergrößerte Darstellung des in der Fig. 4 gezeigten Ausführungsbeispiels des erfindungsgemäßen PVT-Systems 30 abgebildet, wobei in dieser Figur eine mögliche Ausgestaltung der Kühlstruktur dargestellt ist. Die in dieser Figur gezeigte Kühlstruktur weist eine erste Kammer 38 und eine zweite Kammer 50 auf, die miteinander über eine Öffnung verbunden sind. Die erste Kammer wird in dem hier gezeigten Ausführungsbeispiel durch eine erste Lage 34 und eine zweite Lage 60 begrenzt. Das Kühlfluid wird durch den Einlass 40 in die zweite Kammer 50 eingeführt, wobei das Kühlfluid anschließend von der zweiten Kammer 50 in die erste Kammer 38 gelangt.

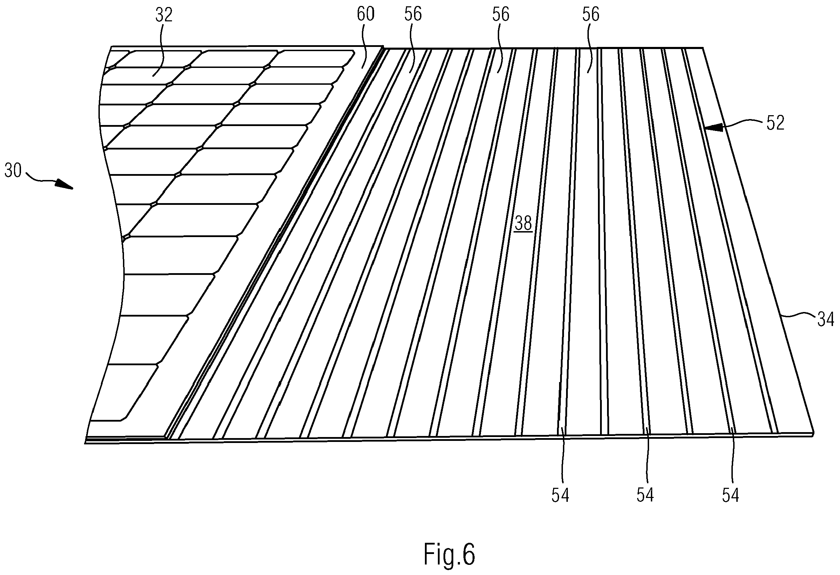

In der Fig. 6 ist ein Ausführungsbeispiel der ersten Kammer 38 des PVT-Systems 30 dargestellt. Bei diesem Ausführungsbeispiel wird die erste Kammer 38 durch eine erste Lage 34 und eine zweite Lage 60 begrenzt. Die erste Lage 34 weist dabei eine Oberflächenstruktur 52 auf. Bei dem in der Fig. 6 gezeigten Ausführungsbeispiel ist die Oberflächenstruktur 52 in Form von durchgehenden Kanalwänden 54 ausgebildet, die sich von der einen Seite der ersten Lage 34 zu der gegenüberliegenden Seite der ersten Lage 34 erstrecken und parallel zueinander verlaufen. Dadurch definieren die Kanalwände 54 mehrere zueinander parallele Kanäle 56, durch die das Kühlfluid strömen kann. Auf diese Weise kann eine relativ große Menge an Kühlfluid durch die erste Kammer 38 strömen, wobei die Strömungsrichtung des Kühlfluids innerhalb der ersten Kammer 38 individuell eingestellt werden kann. Bei dem in der Fig. 6 gezeigten Ausführungsbeispiel verlaufen die Kanäle 56 parallel zur Längsachse der ersten Kammer 38 bzw. der ersten Lage 34 und des Photovoltaik-Moduls 32. Alternativ hierzu können die Kanalwände 54 sowie die durch die Kanalwände 54 definierten Kanäle 56 auch orthogonal zu der vorstehend genannten Längsachse des ersten Kammer 38 verlaufen. Gemäß einigen Ausführungsformen der vorliegenden Erfindung kann vorgesehen sein, dass die Breite der Kanäle 56 mindestens 3x, 5x oder mindestens 10x der Breite der Kanalwände 54 beträgt. Auf diese Weise kann eine besonders große Menge an Kühlfluid durch die erste Kammer strömen und dadurch eine effiziente Kühlung des Photovoltaik-Moduls 32 erreicht werden.

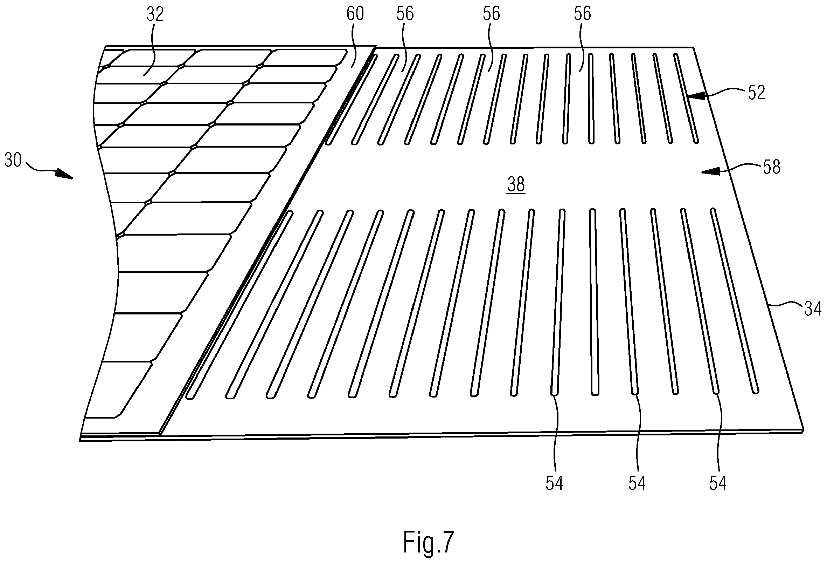

In der Fig. 7 ist ein weiteres Ausführungsbeispiel der ersten Kammer 38 des PVT-Systems 30 gemäß der vorliegenden Erfindung abgebildet. Bei diesem Ausführungsbeispiel sind die Kanalwände 54 nicht mehr durchgehend ausgebildet, wie dies bei dem in der Fig. 6 gezeigten Ausführungsbeispiel der Fall war. Stattdessen weisen die Kanalwände 54 jeweils eine Unterbrechung 58 auf, die etwa in der Mitte der Kanalwände 54 vorgesehen ist. Durch die unterbrochene Ausgestaltung der Kanalwände 54 wird es ermöglicht, das Kühlfluid im Falle eines verstopften Kanals 56 durch einen oder mehrere benachbarte Kanäle 56 zu leiten. Dadurch wird das Risiko einer ineffizienten Kühlung des Photovoltaik-Moduls 32, die sich ansonsten im Falle einzelner verstopfter Kanäle 56 einstellen kann, signifikant reduziert.

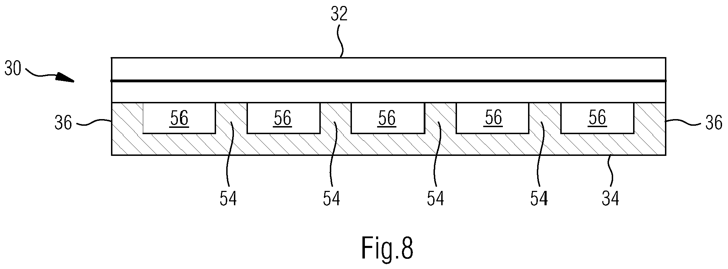

In der Fig. 8 ist ein weiteres Ausführungsbeispiel der ersten Kammer dargestellt, wobei die erste Kammer durch die erste Lage 34, das Solarmodul 32 sowie die Seitenwände 36 begrenzt ist. Innerhalb der ersten Kammer sind einzelne Kanalwände 54 vorgesehen, welche die einzelnen Kanäle 56 definieren, die parallel zueinander verlaufen. Gemäß der in der Fig. 8 dargestellten Ausführungsform ist der Einsatz einer zweiten Lage nicht erforderlich, da die erste Kammer nach oben hin durch die Rückseite des Photovoltaik-Moduls (vorstehend auch als "zweite Seite 32b des Photovoltaik-Moduls" bezeichnet) begrenzt wird.

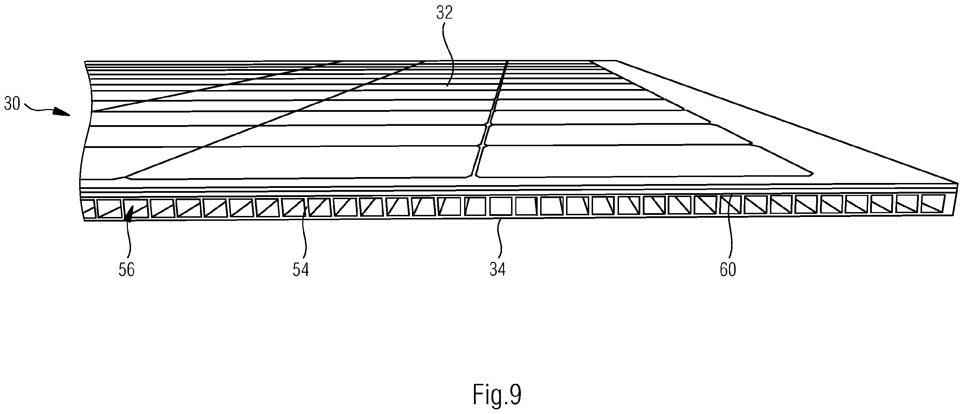

In der Fig. 9 ist ein weiteres Ausführungsbeispiel der ersten Kammer gemäß der vorliegenden Erfindung gezeigt. Bei diesem Ausführungsbeispiel weist die Kühlstruktur eine erste Kammer auf, die durch die erste Lage 34 und die zweite Lage 60, sowie durch Seitenwände, die sich von der ersten Lage 34 zu der zweiten Lage 60 erstrecken, definiert ist. Die erste Kammer ist durch einzelne Kanalwände 54 in einzelne Kanäle 56 unterteilt. Die Kanäle 56 verlaufen parallel zueinander und weisen einen im Wesentlichen rechteckigen Querschnitt auf. Die erste Kammer gemäß der in der Fig. 9 gezeigten Ausführungsform kann in Form einer Polycarbonatplatte ausgebildet sein. Derartige Polycarbonatplatten sind kommerziell verfügbar und günstig in der Herstellung, und werden im Übrigen auch in Gewächshäusern eingesetzt.

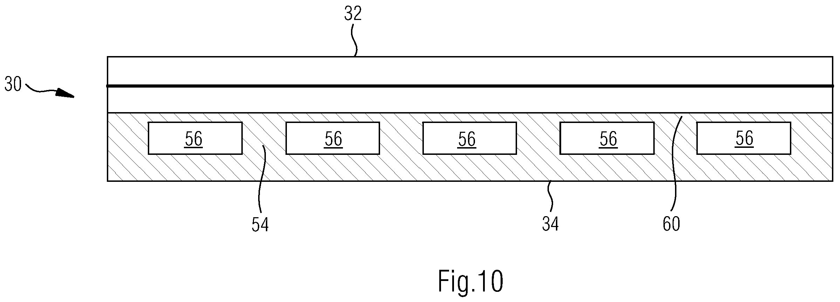

Ferner ist in der Fig. 10 ein weiteres Ausführungsbeispiel der ersten Kammer gemäß der vorliegenden Erfindung dargestellt. Anders als in der in der Fig. 8 abgebildeten Ausführungsform ist die erste Kammer in dem in der Fig. 10 abgebildeten Ausführungsbeispiel durch die erste Lage 34 und die zweite Lage 60 begrenzt. Dies hat den Vorteil, dass die Kühlstruktur eine in sich geschlossene Form aufweist, wodurch das Risiko, dass das Kühlfluid aus der ersten Kammer entweicht und mit dem Photovoltaik-Modul 32 in Kontakt kommt, reduziert wird.

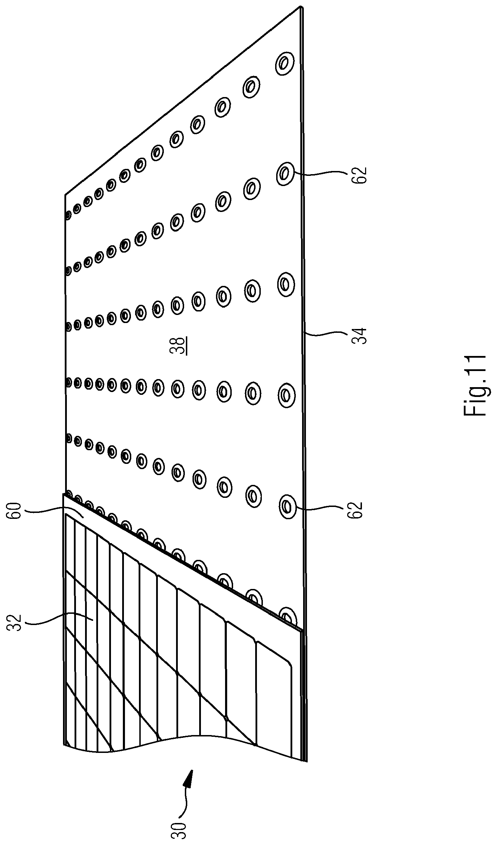

Schließlich ist in der Fig. 11 ein weiteres Ausführungsbeispiel der ersten Kammer 38 des PVT-Systems 30 gemäß der vorliegenden Erfindung abgebildet. Wie bei einigen der vorstehend beschriebenen Ausführungsbeispiele wird die erste Kammer 38 bei dem Ausführungsbeispiel gemäß der Fig. 11 ebenfalls durch die erste Lage 34 und die zweite Lage 60 definiert. Bei dem hier gezeigten Ausführungsbeispiel sind zusätzlich noch Abstandshalter 62 vorgesehen, die auf der ersten Lage 34 angeordnet sind. Bevorzugt sind die Abstandshalter 62 auf die erste Lage 34 geklebt oder mit der ersten Lage 34 verschweißt. Auf diese Weise wird ein besonders einfacher Aufbau der ersten Kammer ermöglicht, der eine Individualisierung der ersten Kammer je nach Anwendungsgebiet ermöglicht. So können die Abstandshalter 62 beispielsweise in einem geringen Abstand zueinander angeordnet werden, wenn eine besonders hohe mechanische Stabilität der ersten Kammer gewünscht ist. Andererseits kann die Anzahl der Abstandshalter 62 reduziert werden und die Abstandshalter 62 können in einem größeren Abstand zueinander angeordnet werden, wenn die Stabilität der ersten Kammer 38 bzw. der Kühlstruktur als weniger kritisch angesehen wird und stattdessen eine möglichst große Menge an Kühlfluid durch die erste Kammer 38 transportiert werden soll. Auch kann vorgesehen sein, dass die erste Lage 34 Aufnahmestrukturen aufweist, die insbesondere als Aufnahmenuten ausgebildet sind. Dadurch können die Abstandshalter besonders einfach und schnell sowie in Abhängigkeit der konkreten Anwendung auf der ersten Lage 34 angeordnet werden, wodurch die Kammer besonders einfach und schnell an die Anforderungen einer spezifischen Anwendung angepasst werden kann. Zudem kann eine Kühlstruktur, die zuvor für eine bestimmte Anwendung konzipiert wurde, durch das Ergänzen oder Entfernen von Abstandshaltern an die konkrete Anwendung angepasst werden.

### BEZUGSZEICHENLISTE

- 10: PVT-System gemäß dem Stand der Technik
- 12: Rahmen
- 14: Glasplatte
- 16: Photovoltaik-Modul
- 18: elektrischer Isolator
- 20: Rohr
- 22: Einlass
- 24: Auslass
- 26: Wärmeisolator
- 30: erfindungsgemäßes PVT-System
- 32: Photovoltaik-Modul
- 32a: erste Seite des Photovoltaik-Moduls
- 32b: zweite Seite des Photovoltaik-Moduls
- 34: erste Lage
- 36: Seitenwand
- 38: erste Kammer
- 40: Einlass
- 42: Rahmen
- 44: erste Haltestruktur
- 46: Aufnahmenut
- 48: zweite Haltestruktur
- 50: zweite Kammer
- 52: Oberflächenstruktur
- 54: Kanalwand
- 56: Kanal
- 58: Unterbrechung
- 60: zweite Lage
- 62: Abstandshalter

## Patentansprüche

1. Hybrides Photovoltaik-Thermie-System (30) zur Erzeugung elektrischer und thermischer Energie, umfassend
- ein Photovoltaik-Modul (32) mit einer ersten Seite (32a) und einer der ersten Seite gegenüberliegenden zweiten Seite (32b), wobei die erste Seite (32a) des Photovoltaik-Moduls (32) dazu ausgelegt ist, Solarenergie aufzunehmen und diese in elektrische Energie umzuwandeln;
- eine Kühlstruktur mit mindestens einer ersten Kammer (38), wobei die Kühlstruktur an der zweiten Seite (32b) des Photovoltaik-Moduls (32) angeordnet ist und die erste Kammer (38) dazu ausgelegt ist, ein Kühlfluid zur Kühlung des Photovoltaik-Moduls (32) aufzunehmen;
- einem Einlass (40) zum Einführen des Kühlfluids in die erste Kammer (38) und einem Auslass zum Herausführen des Kühlfluids aus der ersten Kammer (38).

2. System (30) nach Anspruch 1, **dadurch gekennzeichnet, dass** die Kühlstruktur eine flach ausgebildete erste Kammer (38) aufweist, wobei die erste Kammer (38) eine erste Seite und eine der ersten Seite gegenüberliegenden zweiten Seite aufweist, und die erste Seite der ersten Kammer (38) an der zweiten Seite (32b) des Photovoltaik-Moduls (32) angeordnet ist.

3. System (30) nach Anspruch 2, **dadurch gekennzeichnet, dass** die Kühlstruktur eine zweite Kammer (50) aufweist, die an der zweiten Seite der ersten Kammer (38) angeordnet ist und die über eine Öffnung mit der ersten Kammer (38) verbunden ist, wobei die Öffnung insbesondere schlitzförmig oder kreisförmig ausgebildet ist.

4. System (30) nach Anspruch 2 oder 3, **dadurch gekennzeichnet, dass** die erste Kammer (38) aus einer ersten Lage (34) sowie einer der ersten Lage (34) gegenüberliegenden zweiten Lage (60), sowie zwischen den Lagen angeordneten Seitenwänden (36) gebildet ist, wobei die zweite Lage (60) an der zweiten Seite des Photovoltaik-Moduls (32) angeordnet ist.

5. System (30) nach Anspruch 4, **dadurch gekennzeichnet, dass** die erste Lage (34) oder die zweite Lage (60) eine Oberflächenstruktur (52) aufweist, oder alternativ beide Lagen eine Oberflächenstruktur (52) aufweisen; wobei die Oberflächenstruktur (52) insbesondere rillenförmig ausgebildet sein kann oder durch die Oberflächenstruktur (52) Kanalwände (54) bereitgestellt werden, die parallel oder orthogonal zu der Längsachse der ersten Lage (34) und/oder der zweiten Lage (60) verlaufen und einzelne Kanäle (56) innerhalb der ersten Kammer (38) definieren.

6. System (30) nach Anspruch 5, **dadurch gekennzeichnet, dass** die Kanalwände (54) durchgängig von einer Seite der ersten Kammer (38) zur gegenüberliegenden Seite der ersten Kammer (38) verlaufen.

7. System (30) nach Anspruch 5, **dadurch gekennzeichnet, dass** mindestens eine Kanalwand (54) zumindest eine Unterbrechung (58) aufweist, wobei mindestens eine Unterbrechung (58) bevorzugt in der Mitte einer Kanalwand (54) vorgesehen ist.

8. System (30) nach einem der Ansprüche 2 oder 3, **dadurch gekennzeichnet, dass** die erste Kammer (38) als eine durchgängige Kammer ausgebildet ist

9. System (30) nach einem der Ansprüche 2 bis 8, **dadurch gekennzeichnet, dass** die erste Kammer (38) aus einem Kunststoffmaterial, insbesondere aus Polycarbonat oder aus Polymethylmethacrylat, PMMA, gefertigt ist.

10. System (30) nach Anspruch 4, **dadurch gekennzeichnet, dass** zwischen der ersten Lage (34) und der zweiten Lage (60) Abstandshalter (62) vorgesehen sind, welche die Dicke der ersten Kammer (38) definieren.

11. System (30) nach Anspruch 10, **dadurch gekennzeichnet, dass** die Abstandshalter (62) einen kreisförmigen, einen ringförmigen, einen rechteckigen oder einen dreieckigen Querschnitt aufweisen sowie insbesondere eine Dicke, die kleiner als 20 mm, bevorzugt kleiner als 10 mm, und besonders bevorzugt kleiner als 5 mm ist.

12. System (30) nach einem der Ansprüche 10 oder 11, **dadurch gekennzeichnet, dass** die Abstandshalter (62) aus Kunststoff gefertigt sind.

13. System (30) nach einem der Ansprüche 2 bis 12, **dadurch gekennzeichnet, dass** die Kühlstruktur eine dritte Lage aufweist, wobei die zweite Lage (60) zwischen der ersten Lage (34) und der dritten Lage angeordnet ist.

14. System (30) nach Anspruch 13, **dadurch gekennzeichnet, dass** zwischen der ersten Lage (34) und der zweiten Lage (60) sowie zwischen der zweiten Lage (60) und der dritten Lage Abstandshalter (62) vorgesehen sind, oder dass die zweite Lage (60) an ihren der ersten Lage (34) und der dritten Lage gegenüberliegenden Seiten jeweils eine Oberflächenstruktur (52) aufweist, die mehrere Fluidkanäle (56) definiert.

15. System (30) nach einem der Ansprüche 13 oder zwei 14, **dadurch gekennzeichnet, dass** das Photovoltaik-Modul (32) als bifaziales Photovoltaik-Modul mit zwei photoelektrisch aktiven Seiten ausgebildet ist und dass die erste Kammer (38) der Kühlstruktur zwischen den beiden aktiven Seiten des bifazialen Photovoltaik-Moduls (32) angeordnet ist.
